# EUROPÄISCHE PATENTSCHRIFT

(11) **EP 3 449 163 B1**
(45) Veröffentlichungstag und Bekanntmachung des Hinweises auf die Patenterteilung: **17.11.2021**
(21) Anmeldenummer: 17735374.5
(22) Anmeldetag: 21.04.2017
(51) Int. Cl.: F16L 17/10, F16L 17/06, F16L 37/248, F16L 37/26, F16L 23/22, B29C 63/36, F16L 55/165, F16L 55/18

(54) **DRUCKDICHTE FLANSCHVERBINDUNG UND VERFAHREN ZUM SCHNELLVERBINDEN**
PRESSURE-TIGHT FLANGE CONNECTION AND METHOD FOR QUICK CONNECTION
ACCOUPLEMENT À BRIDES ÉTANCHE À LA PRESSION ET PROCÉDÉ DE RACCORDEMENT RAPIDE

(30) Priorität: 27.04.2016 DE 102016107844; 02.09.2016 DE 102016116506
(43) Veröffentlichungstag der Anmeldung: 06.03.2019
(73) Patentinhaber: Krasowski, Bernd-Jan, 01936 Laußnitz (DE)
(72) Erfinder: Krasowski, Bernd-Jan, 01936 Laußnitz (DE)
(74) Vertreter: Drechsler, Gottfried
(86) Internationale Anmeldenummer: PCT/DE2017/100327
(87) Internationale Veröffentlichungsnummer: WO 2017/186223

(56) Entgegenhaltungen:
- EP-A1- 1 574 774
- EP-A1- 2 827 036
- DE-B- 1 025 687
- DE-C- 912 645
- DE-U1-202010 016 064
- DE-U1-202016 102 251
- GB-A- 969 837

## Beschreibung

### Technisches Gebiet

Die Erfindung betrifft eine druckdichte Flanschverbindung zwischen Apparateflanschen von Druckbehältern oder Drucksystemen einerseits und Verschluss- oder Anschlussflanschen andererseits sowie ein Verfahren zum Schnellverbinden.

### Anwendungsgebiet der Erfindung

Druckdichte Flanschverbindungen werden unter anderem benötigt für Druckbehälter, wie sie beispielsweise als Inversiertrommel für die Aufnahme eines präparierten Auskleidungsschlauchs zum Zwecke der Innensanierung einer schadhaften Rohrleitung im Einstülpverfahren Anwendung finden. Hierbei wird das Schlauchmaterial durch einen großformatigen Apparateflansch in den Druckbehälter beschickt und mit Luftdruck und ggf. Zusatzantrieb durch eine an einem ausgangsseitigen Apparateflansch angeflanschte Druckschleuse hindurch in ein zu sanierendes Abwasserrohr gefördert. Die Beschickungsöffnung ist vor der Druckbeaufschlagung des Druckbehälters sorgfältig mit einem Verschlussflansch, synonym auch als Blindflansch oder Flanschdeckel bezeichnet, zu verschließen, um Druckverluste zu vermeiden. Üblicherweise wird der Verschlussflansch mit Schraubbolzen am Apparateflansch befestigt, die durch über den Umfang der beiden gegenüberstehenden Flansche verteilter Bohrungen hindurchführen und mit Gegenmuttern festgezogen werden (DE 20 2010 016 064 U1), wobei zwischen den beiden Flanschen eine Dichtung sitzt, die z. B. aus einer Platte aus einem geeigneten Elastomerwerkstoff herausgeschnitten ist oder aus einem Dichtungsring besteht und für Luftdichtheit sorgt. Obwohl hierbei durchaus eine zufriedenstellende Abdichtfunktion erreicht werden kann, sind die Nachteile nicht zu übersehen. Zum einen ist das Öffnen und Verschließen der Beschickungsöffnung zeitaufwändig. Ferner sind alle Schraubbolzen sorgfältig und gleichmäßig anzuziehen, um Lecks, Verspannungen, Schäden an der Dichtung und Gewindeverletzungen zu vermeiden. Letztlich verliert sich immer mal der eine oder andere Schraubbolzen oder Gegenmutter, was entweder zu einer mangelhaften Abdichtung führt oder zum zeitaufwändigen Suchen nach einem Ersatz. Es ist dabei zu berücksichtigen, dass die Arbeiten typischerweise auf einer werksfernen Baustelle durchzuführen sind.

Auch für den Ausgangs-Apparateflansch, an den die verschiedensten Anschlussflansche druckdicht angeflanscht werden können, wie beispielsweise für das Anschließen einer bereits genannten Druckschleuse, eines Inversierkopfes oder eines Führungsschlauchs, sind Funktionssicherheit und einfache Handhabung gefragt.

Weitere Anwendungsgebiete für eine druckdichte Flanschverbindung sind zum Beispiel das druckfeste Verschließen eines aufstellbaren Sanier- oder Absperrpackers im Zuge von Wartungs- und Reparaturarbeiten an Rohren oder Kanälen.

### Stand der Technik

Die Druckschrift EP1574774 offenbart eine gattungsgemäße Flanschverbindung, bei der eine Dichtung in eine Nut auf einer Flanschseite eingebracht wird. Die Nut weist einen Druckluftanschluss auf, mittels dem die Dichtung aus der Nut heraus gegen den Gegenflansch der Flanschverbindung gedrückt werden kann.

Aus DE 2056 242 A1 ist eine Flanschdeckeldichtung für eine große Offnung in einem Behälter bekannt, bei der in einer Nut ein Dichtungsstreifen aus plastischem Material und eine am Dichtungsstreifen anliegende Stützleiste angeordnet sind, und Deckel und Flansch durch längs des Deckelumfangs angeordnete Schraubenbolzen zusammengepresst sind, die gleichzeitig ein Widerlager für die Stützleiste bilden. Die Schraubenbolzen müssen nacheinander mit hohem Kraftaufwand mittels ihrer Muttern entgegen der Spannkraft des plastischen Dichtungsstreifens bis zum Anschlag an eine Stützleiste angezogen werden.

Neben Bolzenverschraubungen sind sogenannte Knaggen- oder Storz-SchnellKupplungen üblich, wie sie von der Feuerwehr benutzt werden. Auch hier sitzt eine kreisringförmige Gummidichtung zwischen den Flanschen. Für größere Öffnungsweiten muss zum Kuppeln und Entkuppeln ein Hakenschlüssel-Set benutzt werden, um gegen die Gummidichtung zu arbeiten. Ihre Verwendung beschränkt sich regelmäßig auf kreisrunde Öffnungen. Zudem sind Knaggenkupplungen für große Durchmesser nicht nur sehr teuer, sondern auch schwer und damit unhandlich.

Andere Flansche werden mit Spannbändern und Spannhebeln oder Spannschrauben unter hohem Kraftaufwand angeschlossen.

Letztlich sind auch beider Flansche formschlüssig übergreifende Klammerverbindungen bekannt (DE 102 59 515 A1, DE 10 2005 036 334 B4).

### Aufgabe der Erfindung

Es ist Aufgabe der Erfindung, eine druckdichte Flanschverbindung sowie ein Verfahren zur Verbindung zwischen Apparateflanschen von Druckbehältern oder Drucksystemen einerseits und Verschluss- oder Anschlussflanschen andererseits zu schaffen, wobei besonderen Wert auf ein schnelles, leichtes Anschließen und Lösen ohne Zuhilfenahme von Montagewerkzeugen gelegt wird, die zudem funktionssicher, preiswert und gewichtsarm ist. Für den Verschluss- oder Anschlussflansch sollen die verschiedensten Materialien verwendbar und die verschiedensten Flanschmaße und -formen ausführbar sein. Ferner soll der Verschluss- oder Anschlussflansch selbst verschleißfest, leicht austauschbar und Toleranzen in den Dichtflächen der Flanschflächen ausgleichend sein. Beispielsweise soll sich eine erfindungsgemäße Flanschverbindung für Verschlussflansche von Druckbehältern eignen, wie sie zur Rohrsanierung eingesetzt werden, bei welchen der benötigte Vorrat an Auskleidungsschlauch insgesamt in der Inversionstrommel aufgewickelt (wie GB 1 025 011 A) oder in Lagen gelegt (wie DE 10 2005 036 334 B4) bevorratet ist.

Ebenso soll sich die Erfindung für an Apparateflansche eines Druckbehälters anzukuppelnde Anschlussflansche eignen. Sofern nämlich mit endlosem Auskleidungsschlauch gearbeitet wird, um größere Rohrlängen in einem Zuge zu sanieren, sind zur Vermeidung von Druckverlusten an der Inversionstrommel eingangsseitig und ausgangsseitig an Anschlussflansche anzukoppelnde Druckschleusen vorgesehen, um schubweise eine gewisse Länge an endlosem Auskleidungsschlauch in die Inversionstrommel nachzufördern und in die Rohrleitung zu inversieren (DE 10 2004 043 383 B4, WO 2012 075994 A2,). Ferner auch für Vorrichtungen, bei denen ein Druckbehälter nur eine vom Auskleidungsschlauch kontinuierlich zu passierende angeflanschte Schleuse oder einen Inversionskopf besitzt, die auf der vom Leitungsrohr abgewandten Seite des Druckbehälters angeordnet sind (z. B. DD 99 643 A1, GB 1 044 645 A) oder bei denen der Auskleidungsschlauch kontinuierlich eine erste angekuppelte Druckschleuse, den Druckbehälter und eine zweite angekuppelte Schleuse passiert.

Weitere Anwendungen betreffen Flanschverbindungen zum Koppeln von Verschluss- oder Anschlussflanschen an die Apparateflansche von Sanier- und Absperrpackern, Schlauchlinern oder Drucksystemen ganz allgemein.

### Offenbarung der technischen Lösung

Die Aufgabe wird erfindungsgemäß durch die Merkmale der Ansprüche 1 und 12 gelöst. Vorteilhafte Ausgestaltungen und Fortbildungen sind in den begleitenden Ansprüchen aufgezeigt. Gemäß der Erfindung ist vorgesehen, dass vom Apparateflansch eines Druckbehälters oder Drucksystems ein Gegenlager für einen mittels einer Schnellverbindung angekoppelten Verschluss- oder Anschlussflansch absteht, und zwischen dem Apparateflansch und dem Verschluss- oder Anschlussflansch eine aufstellbare Formdichtung verbaut ist, welche erst im aufgestellten Zustand den Apparateflansch mit dem Verschluss- oder Anschlussflansch gegen das Gegenlager sicher verspannt.

Erfindungsgemäß ist die Formdichtung eine hohle, mit einem Druckanschluss und gegebenenfalls einem Absperrregelventil versehene, in sich geschlossene Dichtung aus einem hoch beanspruchbaren elastomeren Material.

In einer ersten Ausgestaltung der Erfindung stehen vom Apparateflansch Bolzen ab, an dessen Bolzenköpfen oder Bolzenmuttern der Verschluss- oder Anschlussflansch nach einem Ansetzen und Verdrehen im Sinne einer Renkverbindung sein Gegenlager findet. In einer zweiten Ausgestaltung der Erfindung stehen vom Apparateflansch kräftig dimensionierte Haken ab, an dessen Hakenköpfen der Verschluss- oder Anschlussflansch nach dem Ansetzen und Verdrehen im Sinne einer Renkverbindung sein Gegenlager findet.

Gemäß einer dritten Ausgestaltung ist im Bereich des Apparateflansches ein Einschubfach für den Verschluss- oder Anschlussflanschs vorgesehen, welches das Gegenlager bildet.

Ein Flansch als solcher besteht in einer bevorzugten Ausprägung insgesamt aus einem andruckfesten Material und kann einteilig sein, aus mehreren Schichten bestehen oder auch für Sonderanwendungen quer bzw. längs geteilt ausgebildet sein.

Die aufstellbare Formdichtung ist nach einer weiteren Ausgestaltung an einem Apparateflansch unverlierbar, aber auswechselbar befestigt. Sie kann zum Beispiel am Grunde schwalbenschwanzförmig geformt und vom Flansch geklemmt werden oder sie wird mit einem geeigneten Kleber fixiert.

Die Formdichtung lässt sich in einer bevorzugten Ausprägung der Erfindung über eine Druckluftversorgung, die auch den Druckbehälter oder ein Drucksystem speist, aufstellen, um die Flanschverbindung festzulegen und abzudichten, wobei der Luftdruck, der auf die Formdichtung wirkt, über dem Luftdruck im Drucksystem liegen muss. Unter "Aufstellen" ist zu verstehen, dass sich die Formdichtung unter Innendruck mindestens in Verspannrichtung kraftvoll so weitet, dass der Gegenflansch mechanisch - und drucksicher fixiert wird. Wird die Formdichtung später wieder Drucklos gestellt entspannt sich die Formdichtung, wodurch die Montage und Demontage des Gegenflansches ohne Kraftanstrengung erfolgen kann. Selbstverständlich sind auch weitere Druckmedien, insbesondere Wasser geeignet, um die Formdichtung zu beaufschlagen.

Nach einer weiteren Variante sind an Druckbehältern oder für Drucksysteme mit Standardflanschen die erfindungsgemäßen Apparateflansche 2 den Standardflanschen vorgebaut.

In allen offenbarten Ausgestaltungen können gemäß einer speziellen Ausprägung der Erfindung die Gegenlager anstelle am Apparateflansch am Verschluss- oder Anschlussflansch befestigt sein.

Gemäß einer zusätzlichen Ausprägung erlaubt ein Verschlussflansch eine Sicht durch einen Anschlussflansch hindurch in einen Druckbehälter.

### Vorteile der Erfindung

Die Erfindung offenbart ein sehr einfaches, werkzeugloses Schnellverbinden und -lösen eines Verschluss- oder Anschlussflansches an einen Apparateflansches eines Druckbehälters oder Drucksystems. Die Verbindung ist nicht nur sehr sicher und schnell zu bewerkstelligen, sondern auch besonders montagefreundlich, da im Gegensatz zu fachüblichen Flanschkupplungen ein wesentlich geringerer Materialeinsatz für die Flansche erforderlich ist. Die damit verbundene deutliche Gewichtsersparnis ist insbesondere bei großen Beschickungsöffnungen, wie sie beispielsweise in Inversionstrommeln für die Rohrsanierung notwendig sind, von einer nicht zu unterschätzenden Bedeutung. Ein weiterer Vorteil besteht in einer verbesserten Funktions- und Arbeitssicherheit, da eine aufstellbare Dichtung besser Unebenheiten im Material der Flanschblätter oder durch Schmutzpartikel verursachte ausgleichen kann. Da für die infrage kommenden Druckbehältern oder Drucksysteme ohnehin eine Druckluftversorgung vorhanden sein muss, wirkt sich die Notwendigkeit eines Druckluftanschlusses für die Formdichtung nicht nachteilig aus.

### Ausführungsbeispiel

Die Erfindung soll anhand eines Ausführungsbeispiels näher erläutert werden. In den zugehörigen Zeichnungen zeigen:
- **Fig. 1**: einen Druckbehälter mit einem Beschickungsflansch und einem Anschlussflansch,
- **Fig. 2**: eine Flanschpaarung für ein Bolzen-Gegenlager,
- **Fig. 3**: eine Flanschpaarung für ein Haken-Gegenlager und
- **Fig. 4**: eine Flanschpaarung für ein Einschub- Gegenlager.

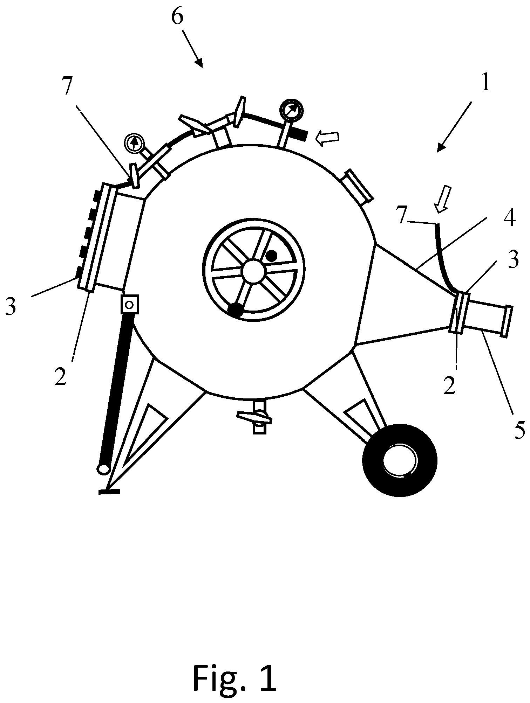

Gemäß der **Fig. 1** ist beispielhaft ein Druckbehälter 1 als mobile Inversionstrommel für eine Schlauchlinersanierung ausgeführt. Durch einen großzügig bemessenen Apparateflansch 2 wird die Inversionstrommel mit Schlauchmaterial beschickt. Nach dem Stand der Technik ist der Apparateflansch 2 mit einem Verschlussflansch druckfest verschraubt, wobei die peripher angeordneten zahlreichen Schraubbolzen jedes Mal zur Abnahme und zum Festschrauben des Verschlussflansches 3 recht umständlich gelöst bzw. wieder angezogen werden müssen. Mit dem erfindungsgemäßen Verschlussflansch 3 vereinfachen sich hingegen die Handgriffe enorm. Etwa der Befüllungsöffnung gegenüber ist ein Auslassstutzen 4 an den Druckbehälter 1 geschweißt, an dessen weiteren Apparateflansch 2 mittels eines Anschlussflansches 3 z. B. eine Schlauchschleuse 5 oder ein Inversionskopf angeflanscht werden kann. Der Druckbehälter 1 und das Drucksystem insgesamt werden über eine Druckluftarmatur 6 mit Druckluft versorgt. Das Aufstellen der im Montage- und Demontageprozess entspannten Formdichtungen kann z.B. über Druckluftanschlüsse 7 erfolgen.

Im Folgenden sollen mehrere Varianten eines erfindungsgemäßen Verschluss- oder Anschlussflansches 3 für einen Apparateflansch näher beschrieben werden.

Die Erfindung macht sich im Beispiel den Umstand zunutze, dass für die Druckluftarmatur 6 zum Verschließen des großen Apparateflansches 2 als auch optional zum Ankuppeln eines Zubehörteils 5 an den Auslassstutzen 4 die ohnehin vorhandene Druckluftversorgung für den Druckbehälter 1 genutzt werden kann.

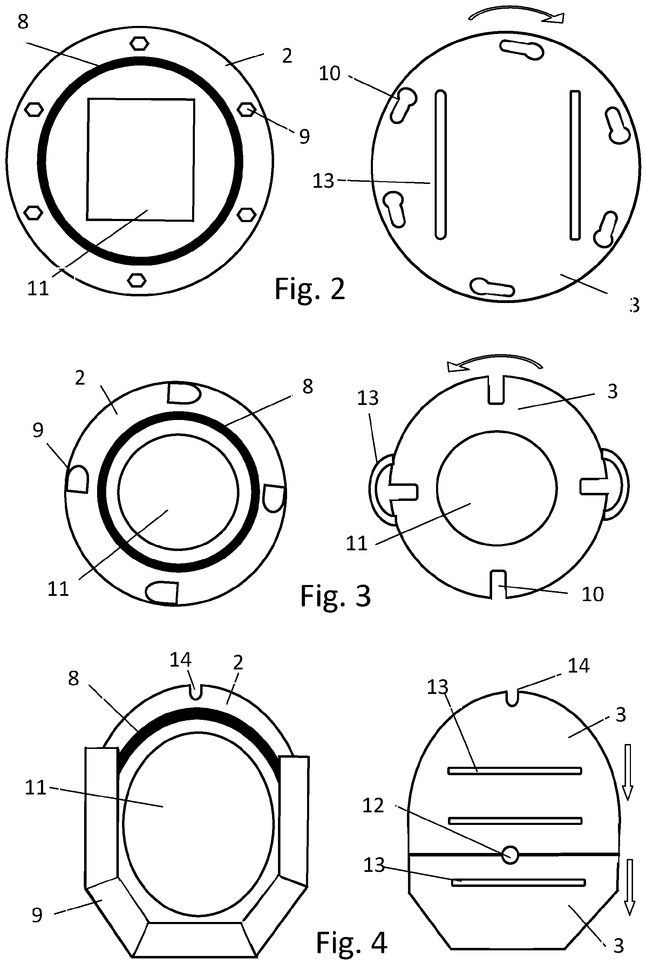

In einer ersten Variante einer Flanschschnellverbindung für einen Druckbehälter 1 oder ein Drucksystem stehen gemäß **Fig. 2** von einem ovalringförmigen Apparateflansch 2 peripher mehrere Bolzen 9 ab, die mit ihren Bolzenköpfen ein Gegenlager für einen ovalen Verschlussflansch 3 als Gegenflansch bilden und deren Anzahl und Stärke sich nach dem entsprechenden Anwendungsfall richtet. Entsprechend hat der Verschlussflansch 3 Schlitze 10 mit einseitigen Öffnungen für die Bolzenköpfe der Bolzen 9. Die Bolzenköpfe hintergreifen den Verschlussflansch 3 nach seinem Anstecken durch die Schlitzöffnungen 10 hindurch und einem nachfolgenden Verdrehen in Richtung der Schlitzenden im Sinne einer Renkverbindung. Der Verschlussflansch 3 lässt sich auf diese Weise schnell und doch definiert mit dem Apparateflansch 2 verbinden und lösen. Auf dem Apparateflansch 2 ist eine aufstellbare, elastomere Formdichtung 8 unverlierbar, aber auswechselbar fixiert, welche die Flanschöffnung 11 umfängt. Im drucklosen Zustand der Formdichtung 8 lässt sich der materialarme und somit recht leichte Verschlussflansch 3 bequem auf die Bolzen 9 stecken und bis zu den Schlitzanschlägen verdrehen. Griffe 13 können die Handhabung erleichtern. Wird jedoch die Formdichtung 8 anschließend mit Druckluft aufgestellt, so presst sich diese einerseits dichtend gegen den Apparateflansch 2 und andererseits dichtend gegen den Verschlussflansch 3, dessen Gegenlager die Bolzenköpfe der Bolzen 9 bilden. Es entsteht eine sichere Flanschverbindung. Bei einer Demontage wird zuerst die Formdichtung 8 entspannt, bevor der Verschlussflansch 3 abgenommen wird.

Eine zweite Variante nach **Fig. 3** unterscheidet sich von der erstgenannten Variante dadurch, dass anstelle der Bolzen stabile Haken 9 vom - hier kreisringförmig gezeichneten - Apparateflansch 2 abstehen, welche einen im Beispiel mit einer Durchlassöffnung 11 dargestellten kreisringförmigen Anschlussflansch 3 als Gegenflansch hintergreifen. Der Anschlussflansch 3 wird im entspannten Zustand der Formdichtung 8 unter Zuhilfenahme der äußeren Griffe 13 leicht verdreht angesetzt und wiederum im Sinne einer Renkverbindung fixiert. In umgekehrter Reihenfolge erfolgt das Lösen bei entspannter Formdichtung 8.

In einer dritten Ausführung gemäß **Fig. 4** ist anstelle einer Renkverbindung eine formschlüssige Einschubverbindung für einen speziellen Verschlussflansch 3 als Gegenflansch vorgesehen. Beide Flansche 2, 3 haben beispielhaft eine spezielle Geometrie. Der dreiseitig umlaufende oder partiell unterbrochene Rand eines Einschubfachs 9 bildet im aufgestellten Zustand der Formdichtung 8 das Gegenlager für den einzuschiebenden Verschlussflansch 3 und ist am Apparateflansch 2 befestigt. Das Herstellen und Lösen der Verbindung vereinfacht sich hierdurch nochmals, insbesondere finden sich Verschlussflansch 3 und Einschubfach 9 schneller. Auch verbessert der umlaufende Rand des Einschubfachs 9 die Stabilität. Ein Justierschlitz in beiden Flanschen 2, 3 erleichtert die richtige Positionierung des Gegenflansches 3 zum Apparateflansch 2. Der Verschlussflansch 3 kann ein- oder mehrteilig sein. Im Beispiel ist der Verschlussflansch 3 quergeteilt. Dies kann Vorteile haben im Zusammenhang mit Arbeiten an einem Drucksystem, z. B. wenn eine Strahlerkette durch einen Apparateflansch 2 eines Absperrpackers hindurch in einen Schlauchliner gezogen wird, um diesen unter anliegender Druckluft auszuhärten. Durch eine Teilung des Verschlussflansches 3 reduziert sich der Druckverlust beim Freigeben der Durchgangsöffnung 11 zum Einführen des Geräts. Die Zugeinrichtung für die Strahlerkette kann durch ein Loch 12 geführt werden.

Bei Druckbehältern oder Drucksystemen mit Standardflanschen als Apparateflansch lassen sich gemäß einer Weiterbildung die erfindungsgemäß hergestellte Apparateflansche 2 den Standardflanschen vorbauen.

### Bezugszeichen

- 1: Druckbehälter
- 2: Apparateflansch
- 3: Verschluss- oder Anschlussflansch
- 4: Auslassstutzen
- 5: Druckschleuse
- 6: Druckluftarmaturen für Druckbehälter
- 7: Druckluftanschluss für eine Formdichtung einer Flanschkupplung
- 8: aufstellbare Formdichtung
- 9: Gegenlager (Bolzen, Haken, Einschubfach)
- 10: Schlitz für eine Renkverbindung
- 11: Durchlassöffnung in einem Flansch
- 12: Schlauchloch
- 13: Griff
- 14: Justierschlitz

## Patentansprüche

1. Druckdichte Flanschverbindung zwischen Apparateflanschen (2) eines Druckbehälters (1) oder eines Drucksystems einerseits und eines Verschluss- oder Anschlussflansches (3) andererseits,
wobei vom Apparateflansch (2) ein Gegenlager (9) für einen mittels einer Schnellverbindung angekoppelten Verschluss- oder Anschlussflansch (3) absteht,
wobei zwischen dem Apparateflansch (2) und dem Verschluss- oder Anschlussflansch (3) eine aufstellbare Formdichtung (8) verbaut ist,
welche erst im aufgestellten Zustand den Apparateflansch (2) mit dem Verschluss- oder Anschlussflansch (3) gegen das Gegenlager (9) sicher verspannt,
wobei die aufstellbare Formdichtung (8) über einen Druckluftanschluss (7) einer Druckluftarmatur (6) und eine angeschlossene Druckluftleitung sowohl aufstellbar als auch entspannbar ist,
**dadurch gekennzeichnet,**
**dass** die aufstellbare Formdichtung eine hohle, mit einem Druckanschluss versehene, in sich geschlossene Dichtung aus einem elastomeren Material ist.

2. Druckdichte Flanschverbindung nach Anspruch 1,
**dadurch gekennzeichnet,**
**dass** vom Apparateflansch (2) Bolzen abstehen, an dessen Bolzenköpfen der Verschluss- oder Anschlussflansch (3) sein Gegenlager (9) findet und
im Sinne einer Renkverbindung auf die Bolzen aufsteck- und verdrehbar ist.

3. Druckdichte Flanschverbindung nach Anspruch 1,
**dadurch gekennzeichnet,**
**dass** vom Apparateflansch (2) Haken abstehen, an dessen Hakenköpfen der Verschluss- oder Anschlussflansch (3) sein Gegenlager (9) findet und
im Sinne einer Renkverbindung auf die Haken aufsteck- und verdrehbar ist.

4. Druckdichte Flanschverbindung nach Anspruch 1,
**dadurch gekennzeichnet,**
**dass** am Apparateflansch (2) ein Einsteckfach (11) befestigt ist, welches für den Verschluss- oder Anschlussflansch (3) das Gegenlager (9) bildet.

5. Druckdichte Flanschverbindung nach einem der Ansprüche 1 bis 4,
**dadurch gekennzeichnet,**
**dass** der Apparateflansch (2) die aufstellbare elastomere Formdichtung (8) unverlierbar, aber auswechselbar trägt.

6. Druckdichte Flanschverbindung nach Anspruch 1 oder 5,
**dadurch gekennzeichnet,**
**dass** die aufstellbare elastomere Formdichtung (8) profiliert ist und im Klemmsitz von einer oder mehreren ausgeschnittenen Apparateflanschelementen gehalten ist, welche miteinander und mit dem Apparateflansch (2) verbunden sind.

7. Druckdichte Flanschverbindung nach Anspruch 1, 5 oder 6,
**dadurch gekennzeichne**t,
dass der Luftdruck in der aufstellbaren elastomere Formdichtung (8) im Verschlusszustand geringfügig über dem Luftdruck im Druckbehälter (1) liegt.

8. Druckdichte Flanschverbindung nach Anspruch1,
**dadurch gekennzeichnet,**
**dass** am Druckbehälter (1) oder an einem Drucksystem mit Standardflanschen die erfindungsgemäßen Apparateflansche (2) den Standardflanschen vorgebaut sind.

9. Druckdichte Flanschverbindung nach mindestens einem der vorstehenden Ansprüche,
**dadurch gekennzeichne**t,
dass die angeordneten Gegenlager (9) anstelle am Apparateflansch (2) am Verschluss- oder Anschlussflansch (3) befestigt sind.

10. Druckdichte Flanschverbindung nach mindestens einem der vorstehenden Ansprüche,
**dadurch gekennzeichnet**
**dass** die Anwendung an Inversionstrommeln, Sanier- und Abdichtpackern sowie an Schlauchlinern erfolgt.

11. Verfahren zur druckdichten Schnellverbindung eines Apparateflansches (2) mit einem Gegenflansch (3),
**dadurch gekennzeichnet,**
**dass** eine aufstellbare hohle, in sich geschlossene, mit einem Druckluftanschluss versehene Formdichtung (8) aus einem elastomeren Material, die zwischen dem Apparateflansch (2) und dem Gegenflansch
(3) verbaut ist, erst nach dem Anflanschen des Gegenflansches (3) mit Druck beaufschlagt und in einen aufgestellten Zustand gebracht wird und in diesem Zustand den Apparateflansch (2) mit dem Gegenflansch (3) gegen ein vom Apparateflansch (2) abstehendes Gegenlager (9) sicher verspannt.

## Claims

1. Pressure-tight flange connection between apparatus flanges (2) of a pressure vessel (1) or pressure system on one side and a closing or connecting flange (3) on the other side,
wherein an abutment (9) projects from the apparatus flange (2) for the closing or connecting flange (3) coupled by a quick connection,
wherein an erectable moulded gasket (8) is installed between the apparatus flange (2) and the closing or connecting flange (3),
which, once in the erect state, securely braces the apparatus flange (2) with the closing or connecting flange (3) against the abutment (9),
wherein the erectable moulded gasket (8) is both erectable and relaxable via a pneumatic connection (7) of a pneumatic faucet (6) and a connected pneumatic line,
**characterized in that**
the erectable moulded gasket (8) is a hollow closed gasket of an elastomeric material provided with a pneumatic connection (7).

2. Pressure-tight flange connection according to claim 1,
**characterized in that**
bolts project from the apparatus flange (2), on the bolt heads of which bolts the closing or connecting flange (3) finds its abutment (9) and
can be plugged onto the bolts and rotated in the sense of a bayonet connection.

3. Pressure-tight flange connection according to claim 1,
**characterized in that**
hooks project from the apparatus flange (2), on the hook heads of which hooks the closing or connecting flange (3) finds its abutment (9) and
can be plugged onto the hooks and rotated in the sense of a bayonet connection.

4. Pressure-tight flange connection according to claim 1,
**characterized in that**
an insertion compartment (11) is fastened to the apparatus flange (2), which insertion compartment forms the abutment (9) for the closing or connecting flange (3).

5. Pressure-tight flange connection according to any of the preceding claims 1 to 4,
**characterized in that**
that the apparatus flange (2) bears the erectable elastomeric moulded gasket (7) in a captive but removable manner.

6. Pressure-tight flange connection according to claim 1 or 5,
**characterized in that**
that the erectable elastomeric moulded gasket (8) is profiled and is held in clamping fit by one or more cut-out apparatus flange elements which are connected to one another and to the apparatus flange (2).

7. Pressure-tight flange connection according to claim 1, 5 or 6,
**characterized in that**
the air pressure in the erectable elastomeric moulded gasket (8) in the closed state is slightly above the air pressure in the pressure vessel (1).

8. Pressure-tight flange connection according to claim 1,
**characterized in that**
the apparatus flanges (2) according to the invention are front-mounted to the standard flanges on the pressure vessel (1) or on a pressure system with standard flanges.

9. Pressure-tight flange connection according to at least one of the preceding claims,
**characterized in that**
the arranged abutments (9) are fastened to the closing or connecting flange (3) instead of the apparatus flange (2).

10. Pressure-tight flange connection according to at least one of the preceding claims,
**characterized in that**
application is on inversion drums, relining and sealing packing as well as hose liners.

11. Method for pressure-tight quick connection of an apparatus flange (2) to a mating flange (3),
**characterized in that**
an erectable hollow, closed moulded gasket (8) of an elastomeric material and provided with a pneumatic connection, which is installed between the apparatus flange (2) and the mating flange (3), is subjected to pressure only after the mating flange (3) has been flanged to it, and is brought into an erected state and, in this state, securely braces the apparatus flange (2) with the mating flange (3) against an abutment (9) projecting from the apparatus flange (2).

## Revendications

1. Raccord à brides étanche à la pression entre les brides d'appareil (2) d'un récipient sous pression (1) ou d'un système sous pression d'un côté, et d'une bride de fermeture ou de raccordement (3) de l'autre côté,
dans lequel une contre-butée (9) destinée à une bride de fermeture ou de raccordement (3) accouplée par raccordement rapide fait saillie par rapport à la bride d'appareil (2),
dans lequel un joint d'étanchéité moulé (8) redressable est installé entre la bride d'appareil (2) et la bride de fermeture ou de raccordement (3),
lequel joint serre de manière sûre la bride d'appareil (2) à la bride de fermeture ou de raccordement (3) contre la contre-butée (9) seulement lorsqu'il se trouve à l'état redressé,
le joint d'étanchéité moulé (8) redressable pouvant être redressé ou détendu via un raccord pneumatique (7) d'un robinet pneumatique (6) et d'une conduite pneumatique connectée,
**caractérisé en ce que**
le joint d'étanchéité moulé (8) redressable est un joint creux fermé pourvu d'un raccord pneumatique (7) et fabriqué dans un matériau élastomère.

2. Raccord à brides étanche à la pression selon la revendication 1,
**caractérisé en ce que**
des boulons font saillie par rapport à la bride d'appareil (2), sur les têtes de boulon desquels boulons la bride de fermeture ou de raccordement (3) trouve sa contre-butée (9) et
peut être enfichée et tournée sur les boulons dans le sens d'une liaison à baïonnette.

3. Raccord à brides étanche à la pression selon la revendication 1,
**caractérisé en ce que**
des crochets font saillie à partir de la bride d'appareil (2), sur les têtes de crochet desquels crochets la bride de fermeture ou de raccordement (3) trouve sa contre-butée (9) et
peut être enfichée et tournée sur les crochets dans le sens d'une liaison à baïonnette.

4. Raccord à brides étanche à la pression selon la revendication 1,
**caractérisé en ce que**
fixé à la bride d'appareil (2) se trouve un compartiment d'enfichage (11) qui est destiné à former la contre-butée (9) pour la bride de fermeture ou de raccordement (3).

5. Raccord à brides étanche à la pression selon une des revendications 1 à 4,
**caractérisé en ce que**
la bride d'appareil (2) porte le joint d'étanchéité moulé (8) élastomère redressable de manière imperdable mais amovible.

6. Raccord à brides étanche à la pression selon la revendication 1 ou 5,
**caractérisé en ce que**
le joint d'étanchéité moulé (8) élastomère redressable est profilé et tenu en ajustement serré par un ou plusieurs éléments de la bride d'appareil découpés reliés l'un à l'autre ainsi qu'à la bride d'appareil (2).

7. Raccord à brides étanche à la pression selon la revendication 1, 5 ou 6,
**caractérisé en ce que**
la pression de l'air à l'intérieur du joint d'étanchéité (8) élastomère redressable à l'état de fermeture est faiblement supérieure à la pression de l'air à l'intérieur du récipient sous pression (1).

8. Raccord à brides étanche à la pression selon la revendication 1,
**caractérisé en ce que**
les brides d'appareil (2) selon l'invention sont montées devant les brides standard sur le récipient sous pression (1) ou sur un système sous pression.

9. Raccord à brides étanche à la pression selon au moins une des revendications précédentes,
**caractérisé en ce que**
les contre-butées (9) disposées sont fixées sur la bride de fermeture ou de raccordement (3) au lieu de l'être sur la bride d'appareil (2).

10. Raccord à brides étanche à la pression selon au moins une des revendications précédentes,
**caractérisé en ce que**
l'utilisation se situe sur les tambours d'inversion, les garnitures d'étanchéité de rénovation et des garnitures d'étanchéité d'obturation ainsi que sur les revêtements intérieurs de tuyau.

11. Procédé de raccordement rapide étanche à la pression d'une bride d'appareil (2) à une contre-bride (3),
**caractérisé en ce que**
un joint d'étanchéité moulé (8) redressable, creux, fermé et formé d'un matériau élastomère, installé entre la bride d'appareil (2) et la contre-bride (3), n'est soumis à une pression qu'après le raccordement de la contre-bride (3) et est amené à un état redressé et, une fois dans cet état, serre de manière sûre la bride d'appareil (2) à la contre-bride (3) contre une contre-butée (9) qui fait saillie par rapport à la bride d'appareil (2).
